# EUROPÄISCHE PATENTSCHRIFT

(11) **EP 1 213 169 B1**
(45) Veröffentlichungstag und Bekanntmachung des Hinweises auf die Patenterteilung: **10.10.2007**
(21) Anmeldenummer: 01126161.7
(22) Anmeldetag: 03.11.2001
(51) Int. Cl.: B60J 7/14

(54) **Fahrzeug mit Klappverdeck**
Vehicle with foldable top
Véhicule avec toit pliant

(30) Priorität: 05.12.2000 DE 10060404
(43) Veröffentlichungstag der Anmeldung: 12.06.2002
(73) Patentinhaber: Bayerische Motoren Werke Aktiengesellschaft, 80809 München (DE)
(72) Erfinder: Augustin, Stephan, 80796 München (DE); Schröder, Burkhard, 48336 Sassenberg (DE)

(56) Entgegenhaltungen:
- DE-C- 19 706 397
- US-A- 4 796 943
- US-A- 5 584 522
- US-A- 5 647 630

## Beschreibung

Die Erfindung betrifft ein Fahrzeug mit Klappverdeck, mit den im Oberbegriff des Patentanspruches 1 angegebenen Merkmalen.

Ein derartiges Fahrzeug ist in der DE 197 06 397 C1 angegeben. Ein Fahrzeug mit Klappverdeck ist in der DE 196 34 510 C1 angegeben, bei dem die Schwenkteile durch hintere Lenker eines seitlichen Viergelenks gebildet sind. Bei geöffnetem Klappverdeck sind das Dachteil und das Heckteil hinter den Fondsitzen abgelegt, wodurch der Gepäckraum des Fahrzeugs erheblich eingeschränkt ist. Die seitlich symmetrisch gegenüberliegenden Viergelenke sind lediglich über das Heckteil verbunden. Bei einer unsymmetrischen Belastung des Klappverdecks beim Öffnen bzw. Schließen dürfte das Klappverdeck Kipp- oder Schwenkbewegungen ausführen, die das Verstellen des Klappverdecks erschweren.

Der Erfindung liegt die Aufgabe zugrunde, ein Fahrzeug mit Klappverdeck mit den Merkmalen im Oberbegriff des Patentanspruches 1 anzugeben, bei dem der hintere Gepäckraum bei geöffnetem Klappverdeck weniger eingeschränkt ist. Außerdem soll das Klappverdeck stabiler gestützt sein.

Diese Aufgabe ist durch die im Patentanspruch 1 angegebenen Merkmale gelöst. Vorteilhafte Ausgestaltungen der Erfindung sind den Unteransprüchen entnehmbar.

Bei den beiden alternativen Ausführungen sind die beiden seitlich gegenüberliegenden Schwenkteile entweder durch eine Rückenlehne im Fondraum des Fahrzeugs gebildet, die sich vorzugsweise etwa über die gesamte Innenraumbreite erstreckt, oder durch einen Rahmen gebildet, der ein die beiden Schwenkteile verbindendes Querteil aufweist. Die Rückenlehne im Fondraum bzw. der Rahmen ist weitgehend ecksteif, wodurch das Heckteil und damit das Klappverdeck stabiler festgehalten sind. Beim Öffnen des Klappverdecks werden die Verdeckteile platzsparend im Wesentlichen über den Fondsitzen zusammengefaltet, so dass der Gepäckraum nicht oder kaum eingeschränkt ist. Das Dachteil kann so ausgebildet sein, dass es in Offenstellung des Klappverdecks den Fondraum nahezu vollständig überdeckt, wodurch ein separates Abdeckteil für das geöffnete Klappverdeck entfallen kann. Das Klappverdeck weist nur wenige Teile auf, die kostengünstig zu fertigen sind und eine hohe Funktionssicherheit aufweisen.

Ein Ausführungsbeispiel der Erfindung wird anhand einer Zeichnung näher erläutert.
Es zeigen
- Fig. 1: einen mittleren Längsbereich eines Kraftfahrzeugs mit Klappverdeck, das geschlossen ist,
- Fig. 2: eine Zwischenposition beim Öffnen des Klappverdecks und
- Fig. 3: das Klappverdeck in seiner Offenlage.

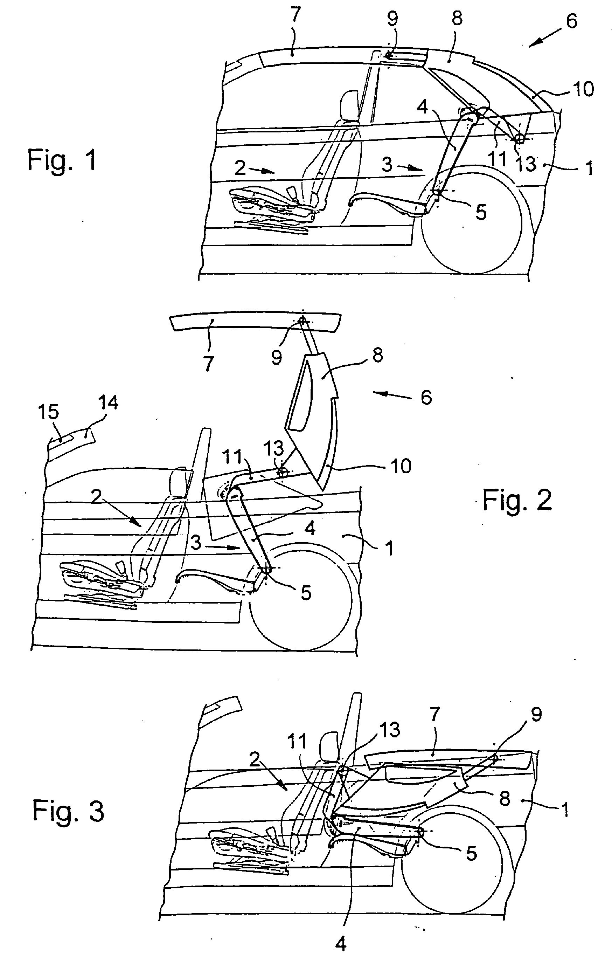

Das in Fig. 1 teilweise dargestellte Fahrzeug 1 ist ein Kraftfahrzeug mit Klappverdeck 6, das mit zwei vorderen Fahrzeugsitzen 2 und zwei hinteren Fahrzeugsitzen 3 gefertigt ist. Den beiden hinteren Fahrzeugsitzen 3 ist eine gemeinsame Rückenlehne 4 zugeordnet, die sich etwa über die gesamte Innenraumbreite des Fahrzeugs 1 erstreckt und um eine untere Fahrzeugquerachse 5 schwenkbar ist. Das Klappverdeck 6 weist ein Dachteil 7 und ein Heckteil 8 auf, die um eine Fahrzeugquerachse 9 schwenkbar verbunden sind. Das Heckteil 8 nimmt in einer Hecköffnung eine Heckscheibe 10 vorzugsweise aus Glas auf. Von den beiden oberen Seitenbereichen der in der dargestellten Normallage befindlichen Rückenlehne 4 steht jeweils ein Stützschenkel 11 nach hinten unten ab und bilden eine Schwenkachse 13 in Fahrzeugquerrichtung, um die das Heckteil 8 schwenkbar mit der Rückenlehne 4 verbunden ist.

In Fig. 2 befindet sich das Klappverdeck 6 in einer Zwischenposition beim Verstellen von der in Fig. 1 dargestellten Schließlage in die in Fig. 3 dargestellte Offenlage.

Das Öffnen des Klappverdecks 6 kann manuell oder motorisch erfolgen, wobei zunächst nicht dargestellte Verschlüsse am oberen Windlauf 14 über der vorderen Windschutzscheibe 15 manuell oder motorisch zu lösen sind. Wie aus Fig. 2 hervorgeht, wird beim Öffnen des Klappverdecks 6 die Rückenlehne 4 im Fondraum um die Fahrzeugquerachse 5 nach vorne in eine etwa horizontale Lage geschwenkt. Beim Verschwenken der Rückenlehne 4 wird über eine nicht dargestellte Zwangssteuerungseinrichtung, die Lenker und/oder ein- bzw. mehrarmige Hebel aufweisen kann, das Heckteil 8 und das Dachteil 7 zwangsweise verstellt. Beim Verstellen des Klappdaches 6 von der Schließlage in die Offenlage und umgekehrt werden das Heckteil 8 und die Rückenlehne 4 entgegengesetzt verschwenkt und das Dachteil 7 etwa parallel verstellt.

In Fig. 3 befindet sich das Klappverdeck 6 in seiner Offenlage, in der die Teile des Klappverdecks 6 im Wesentlichen über der etwa in horizontaler Lage befindlichen Rückenlehne 4 zusammengefaltet angeordnet sind. Das oberste Teil bildet das Dachteil 7, das den Fondraum des Fahrzeugs 1 nahezu vollständig überdeckt. Der nicht dargestellte Kofferraum im Heckbereich des Fahrzeugs 1 ist dadurch kaum oder nicht eingeschränkt. Bei geöffnetem Klappverdeck 6 sind die Fondraumsitze nicht nutzbar. Werden die Fondraumsitze als Sitzgelegenheit benötigt, ist das Klappverdeck 6 zu schließen.

In Abänderung bzw. Ergänzung des Ausführungsbeispiels kann ein Schiebeund/oder Hebedach mit einem vor eine Dachöffnung verstellbaren Deckel verwendet sein. Die Dachöffnung kann vor oder in dem Dachteil ausgebildet sein, das beispielsweise ein vorderes oder hinteres Dachteil ist. Der Deckel des Schiebeund/oder Hebedaches kann in eine Aufnahmeöffnung des betreffenden Dachteiles ganz oder teilweise einzubringen oder an die Innenseite oder Außenseite einer Wand im Dachbereich zu verstellen sein. Bei dem Ausführungsbeispiel weisen die Stützschenkel zu den durch die Rückenlehne 4 gebildeten seitlichen Schwenkteilen einen etwa rechten Winkel auf. Dieser Winkel kann auch ein anderer Winkel sein. Ebenso ist es möglich, dass das Heckteil ohne Zwischenschaltung von Stützschenkeln direkt an der Rückenlehne schwenkbar befestigt ist. Die seitlichen Schwenkteile können über ein Querteil zu einem Rahmen verbunden sein. Bei Verwendung der Stützschenkel können diese über ein Querteil verbunden sein. Das Heckteil kann an einem separaten Rahmen schwenkbar befestigt sein, der hinter der Rückenlehne im Fondraum um eine beispielsweise untere Fahrzeugquerachse schwenkbar ist. Ist hinter der Rückenlehne im Fondraum ein Rahmen zur schwenkbaren Abstützung des Heckteiles vorgesehen, so kann die Rückenlehne unabhängig von dem Rahmen in eine etwa horizontale Lage schwenkbar sein, in der vom geöffneten Gepäckraum her Gegenstände bis in den Fondraum einzubringen und beispielsweise auf der horizontalen Rückseite der Rückenlehne abzulegen und in dieser Lage im Fahrzeug mitzuführen sind. Die von einer Hecköffnung des Heckteiles aufgenommene Heckscheibe kann fest mit dem Heckteil verbunden oder um eine Achse vor die Hecköffnung oder von dieser weg schwenkbar sein. Die Heckscheibe kann auch über eine motorische oder mechanische Verstelleinrichtung von der Hecköffnung weg in eine Aufbewahrungslage und zurück verstellbar sein.

## Patentansprüche

1. Fahrzeug mit Klappverdeck (6), das ein um eine Fahrzeugquerachse (9) schwenkbar mit einem Dachteil (7) verbundenes Heckteil (8) aufweist, das in einer Hecköffnung eine Heckscheibe (10) aufnimmt und um eine Querachse (13) schwenkbar mit zwei sich seitlich gegenüber liegenden Schwenkteilen (4) verbunden ist, die beim Öffnen des Klappverdecks (6) entgegengesetzt zum Heckteil (8) nach vorne in eine Offenlage schwenken, mit einer Rückenlehne (4) im Fondraum, die um eine untere Fahrzeugquerachse (5) in eine etwa horizontale Lage nach vorne schwenkbar ist, wobei in der Offenlage des Klappverdecks (6) die Teile des Klappverdecks (6) im wesentlichen oberhalb der etwa in der horizontalen Lage befindlichen Rückenlehne (4) zusammen gefaltet angeordnet sind, **dadurch gekennzeichnet, dass** die gesamte Rückenlehne (4) bis zum Anliegen an dem zugeordneten Sitzteil des hinteren Fahrzeugsitzes (3) in die etwa horizontale Lage nach vorne schwenkbar ist und die beiden sich seitlich gegenüber liegenden Schwenkteile durch die Rückenlehne (4) im Fondraum gebildet sind.

2. Fahrzeug mit Klappverdeck, das ein um eine Fahrzeugquerachse schwenkbar mit einem Dachteil verbundenes Heckteil aufweist, das in einer Hecköffnung eine Heckscheibe aufnimmt und um eine Querachse schwenkbar mit zwei sich seitlich gegenüber liegenden Schwenkteilen verbunden ist, die beim Öffnen des Klappverdecks entgegengesetzt zum Heckteil nach vorne in eine Offenlage schwenken, mit einer Rückenlehne im Fondraum, die um eine untere Fahrzeugquerachse in eine etwa horizontale Lage nach vorne schwenkbar ist, wobei in der Offenlage des Klappverdecks die Teile des Klappverdecks im wesentlichen oberhalb der etwa in der horizontalen Lage befindlichen Rückenlehne zusammen gefaltet angeordnet sind, **dadurch gekennzeichnet, dass** die gesamte Rückenlehne bis zum Anliegen an dem zugeordneten Sitzteil des hinteren Fahrzeugsitzes in die etwa horizontale Lage nach vorne schwenkbar ist und die beiden sich seitlich gegenüber liegenden Schwenkteile über ein Querteil zu einem weitgehend ecksteifen Rahmen verbunden sind, der hinter der Rückenlehne angeordnet ist und bei in die etwa horizontale Lage nach vorne geschwenkter Rückenlehne um eine untere Fahrzeugquerachse in eine etwa horizontale Lage nach vorne über die Rückenlehne schwenkbar ist.

3. Fahrzeug nach Anspruch 1 oder 2
**dadurch gekennzeichnet, dass** in der Offenlage des Klappverdecks (6) das Dachteil (7) den Fondraum des Fahrzeugs (1) nahezu vollständig überdeckt.

4. Fahrzeug nach einem der Ansprüche 1 bis 3,
**dadurch gekennzeichnet, dass** der Rahmen fest oder über eine Verriegelungseinrichtung lösbar mit der Rückenlehne im Fondraum verbunden ist.

5. Fahrzeug nach einem der Ansprüche 1 bis 4,
**dadurch gekennzeichnet, dass** in der Normallage der Rückenlehne (4) im Fondraum bzw. des Rahmens die Schwenkteile (Rückenlehne 4) etwa vertikal stehen oder nach hinten oben geneigt sind, und jeweils vom oberen Bereich der beiden seitlichen Schwenkteile (Rückenlehne 4) ein Stützschenkel (11) nach hinten absteht, die etwa an ihrem nach hinten abstehenden Endbereich zusammen eine in Fahrzeugquerrichtung verlaufende Drehachse (13) bilden, um die das Heckteil (8) schwenkbar ist.

6. Fahrzeug nach Anspruch 5,
**dadurch gekennzeichnet, dass** die Stützschenkel (11) einen etwa rechten Winkel mit den Schwenkteilen (Rückenlehne 4) einschließen.

7. Fahrzeug nach Anspruch 5 oder 6,
**dadurch gekennzeichnet, dass** die Stützschenkel (11) oder das Querteil eine Querachse (13) bilden, um die das Heckteil (6) schwenkbar ist.

8. Fahrzeug nach einem der Ansprüche 1 bis 7,
**dadurch gekennzeichnet, dass** eine Zwangssteuerungseinrichtung mit Lenkern und/oder ein- bzw. mehrarmigen Hebeln vorgesehen ist, die beim Verschwenken der Schwenkteile (Rückenlehne 4) in die Offenlage des Klappverdecks (6) das Heckteil (8) und das Dachteil (7) zwangsweise mit einschwenken.

9. Fahrzeug nach einem der Ansprüche 1 bis 8,
**dadurch gekennzeichnet, dass** das Klappverdeck (6) ein Schiebe- und/oder Hebedach mit einem Deckel aufweist, der vor eine Dachöffnung vor oder in dem Dachteil verstellbar ist.

10. Fahrzeug nach Anspruch 9,
**dadurch gekennzeichnet, dass** der Deckel des Schiebe- und/oder Hebedaches in eine Aufnahmeöffnung des Dachteiles ganz oder teilweise einzubringen oder von innen oder von außen vor eine Wand im Dachbereich verstellbar ist.

## Claims

1. A vehicle with a convertible hood (6) comprising a rear part (8) connected to a roof part (7) so as to be pivotable around a transverse axis (9) of the vehicle, the rear part holding a back window (10) in an opening and being pivotably connected round a transverse axis (13) to two laterally opposite pivotable parts (4) which, when the convertible hood (6) is opened, pivot in opposite directions to the rear part (8) forward into an open position, the vehicle comprising a back rest (4) in the back space and pivotable forwards into an approximately horizontal position around a lower transverse axis (5) of the vehicle, wherein when the convertible hood (6) is in the open position the parts of the convertible hood (6) are folded together substantially above the approximately horizontal back rest (4), **characterised in that** the entire back rest (4), until it abuts the associated seat part of the rear vehicle seat (3), is pivotable forward into an approximately horizontal position and the two laterally opposite pivoting parts comprise the back rest (4) in the back space.

2. A vehicle with a convertible hood comprising a rear part connected to a roof part so as to be pivotable around a transverse axis of the vehicle, the rear part holding a back window in an opening and being pivotably connected round a transverse axis to two laterally opposite pivotable parts which, when the convertible hood is opened, pivot in opposite directions to the rear part forward into an open position, the vehicle comprising a back rest in the back space and pivotable forwards into an approximately horizontal position around a lower transverse axis of the vehicle, wherein when the convertible hood is in the open position the parts thereof are folded together substantially above the approximately horizontal back rest, **characterised in that** the entire back rest, until it abuts the associated seat part of the rear seat, is pivotable forward into an approximately horizontal position and the two laterally opposite pivotable parts are connected by a transverse part to form a frame substantially stiff at the corners and disposed behind the back rest and pivotable forward over the back rest into an approximately horizontal position when the back rest has been pivoted forward into the approximately horizontal position around a lower transverse axis of the vehicle.

3. A vehicle according to claim 1 or claim 2,
**characterised in that** when the convertible hood (6) is in the open position the roof part (7) nearly completely covers the back space in the vehicle (1).

4. A vehicle according to any of claims 1 to 3,
**characterised in that** the frame is connected to the back rest in the back space, either permanently or releasably via a locking device.

5. A vehicle according to any of claims 1 to 4,
**characterised in that** when the frame or the back rest (4) is in the normal position in the back space the pivoting parts (back rest 4) are approximately vertical or inclined upwards and to the rear, and a supporting limb (11) extends downwards from the top region of each of the two lateral pivoting parts (back rest 4), the two limbs together, at their backward-projecting end region, forming an axis of rotation (13) extending in the transverse direction of the vehicle, around which the rear part (8) is pivotable.

6. A vehicle according to claim 5,
**characterised in that** the supporting limbs (11) enclose approximately a right angle with the pivoting parts (back rest 4).

7. A vehicle according to claim 5 or claim 6,
**characterised in that** the limbs (11) or the transverse part form a transverse axis (13) around which the rear part (6) is pivotable.

8. A vehicle according to any of claims 1 to 7,
**characterised in that** an automatic control device is provided with control arms and/or single-armed and/or multi-armed levers which automatically swing the rear part (8) and the roof part (7) when the pivotable parts (back rest 4) are pivoted into the open position of the convertible hood (6).

9. A vehicle according to any of claims 1 to 8,
**characterised in that** the convertible hood (6) comprises a sliding and/or vertically adjustable roof with a cover which is adjustable in front of a roof opening, in front of or in the roof part.

10. A vehicle according to claim 9,
**characterised in that** the cover of the sliding and/or vertically adjustable roof is partly or completely insertable into an opening in the roof part or is adjustable from the interior or from the exterior in front of a wall in the roof region.

## Revendications

1. Véhicule à toit pliant (6) comportant une partie arrière (8) reliée de manière pivotante à une partie de toit (7) autour d'un axe (9) transversal par rapport au véhicule, et équipée d'une lunette arrière (10) dans une ouverture arrière, cette partie arrière étant reliée autour d'un axe transversal (13) à deux parties pivotantes (4) latérales qui se font face, et qui, à l'ouverture du toit pliant (6), pivotent vers l'avant en position d'ouverture, dans le sens opposé à celui du mouvement de la partie arrière (8),
un dossier (4) dans le volume du fond qui peut basculer vers l'avant en position sensiblement horizontale autour d'un axe transversal inférieur (5) du véhicule, dans lequel
en position d'ouverture du toit pliant (6), les parties du toit pliant (6) sont pliées pour l'essentiel, au-dessus du dossier (4) sensiblement en position horizontale,
**caractérisé en ce que**
l'ensemble du dossier (4) bascule vers l'avant dans la position sensiblement horizontale jusqu'à venir en appui contre l'assise correspondante du siège arrière (3) du véhicule et les deux parties latérales pivotantes, qui se font face, sont constituées par le dossier (4) dans le volume du fond.

2. Véhicule à toit pliant comportant une partie arrière reliée à une partie de toit, de manière basculante autour d'un axe transversal du véhicule, la partie arrière ayant une ouverture munie d'une lunette arrière est reliée de manière basculante autour d'un axe transversal à deux parties pivotantes, latérales, qui se font face et qui, à l'ouverture du toit pliant basculant vers l'avant en position d'ouverture, contrairement à la partie arrière,
un dossier dans le volume du fond qui peut basculer vers l'avant autour d'un axe transversal inférieur du véhicule, dans une position sensiblement horizontale,
et dans lequel en position d'ouverture du toit pliant, les parties du toit pliant sont repliées principalement au-dessus du dossier sensiblement en position horizontale,
**caractérisé en ce que**
jusqu'à venir contre l'assise associée, du siège arrière du véhicule, l'ensemble du dossier bascule vers l'avant dans une position sensiblement horizontale et les deux parties latérales basculantes, qui se font face, sont reliées par une partie transversale pour former un châssis pratiquement sans élément de coin, situé derrière le dossier et qui, lorsque le dossier est basculé vers l'avant dans une position sensiblement horizontale, autour de l'axe transversal inférieur du véhicule, bascule vers l'avant dans une position sensiblement horizontale au-dessus du dossier arrière.

3. Véhicule selon la revendication 1 ou 2,
**caractérisé en ce qu'**
en position d'ouverture du toit pliant (6), la partie de toit (7) couvre pratiquement complètement le volume du fond du véhicule (1).

4. Véhicule selon l'une des revendications 1 à 3,
**caractérisé en ce que**
le cadre est relié solidairement au volume du fond ou de manière amovible, par une installation de verrouillage au dossier.

5. Véhicule selon l'une des revendications 1 à 4,
**caractérisé en ce qu'**
en position normale du dossier (4) dans le volume du fond ou du cadre, les parties pivotantes (dossier 4) sont sensiblement verticales ou sont inclinées vers le haut et vers l'arrière et dans la zone supérieure de chacune des deux parties latérales pivotantes (dossier 4) une branche d'appui (11) est en saillie vers l'arrière, cette branche formant en combinaison avec sa zone d'extrémité en saillie vers l'arrière, un axe de rotation (13) transversal à la direction du véhicule, et autour duquel bascule la partie de toit (8).

6. Véhicule selon la revendication 5,
**caractérisé en ce que**
les branches d'appui (11) font un angle sensiblement droit avec les parties pivotantes (dossier 4).

7. Véhicule selon la revendication 5 ou 6,
**caractérisé en ce que**
la branche d'appui (11) ou la partie transversale forment un axe transversal (11) autour duquel la partie arrière (6) peut basculer.

8. Véhicule selon l'une des revendications 1 à 7,
**caractérisé par**
une installation de commande forcée avec des bras et/ou un levier à un ou plusieurs bras qui font basculer de force la partie arrière (8) et la partie de toit (7) lors du basculement des parties basculantes (dossier 4) en position d'ouverture du toit pliant (6).

9. Véhicule selon l'une des revendications 1 à 8,
**caractérisé en ce que**
le toit pliant (6) comporte un toit coulissant et/ou relevable avec un panneau qui peut être mis dans une ouverture du toit ou être dégagé de la partie de toit.

10. Véhicule selon la revendication 9,
**caractérisé en ce que**
le panneau du toit coulissant et/ou relevable est mis dans une ouverture de réception de la partie de toit en totalité ou en partie et peut être mis de l'intérieur ou de l'extérieur devant une paroi dans la zone du toit.
